(19) Europäisches Patentamt / European Patent Office / Office européen des brevets

(11) **EP 2 464 776 B1**

(12) **EUROPEAN PATENT SPECIFICATION**

(45) Date of publication and mention
of the grant of the patent:
**18.05.2016 Bulletin 2016/20**

(51) Int Cl.:
***D04H 13/00*** *(2006.01)*     ***B32B 5/26*** *(2006.01)*

(21) Application number: **10749707.5**

(22) Date of filing: **12.08.2010**

(86) International application number:
**PCT/US2010/045296**

(87) International publication number:
**WO 2011/019895 (17.02.2011 Gazette 2011/07)**

(54) **FIBROUS STRUCTURES**

FASERSTRUKTUREN

STRUCTURES FIBREUSES

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **14.08.2009 US 234001 P**

(43) Date of publication of application:
**20.06.2012 Bulletin 2012/25**

(73) Proprietor: **The Procter & Gamble Company
Cincinnati, OH 45202 (US)**

(72) Inventors:
• **CABELL, David, William
Cincinnati
Ohio 45245 (US)**
• **KRAUS, Christopher, Scott
Sunman
Indiana 47041 (US)**
• **EVERS SMITH, Linda
Morrow
Ohio 45152 (US)**

(74) Representative: **Kremer, Véronique Marie
Joséphine
Procter & Gamble Service GmbH
IP Department
Frankfurter Strasse 145
61476 Kronberg im Taunus (DE)**

(56) References cited:
**US-A- 3 960 652    US-A- 4 355 066
US-A- 4 885 202    US-A- 5 378 528
US-A- 5 431 643    US-B1- 6 642 428**

## Description

FIELD OF THE INVENTION

The present invention relates to fibrous structures and more particularly to fibrous structures comprising a plurality of solid additives that are positioned between a nonwoven substrate and a bonding material which is bonded to the nonwoven substrate at one or more bond sites.

BACKGROUND OF THE INVENTION

Fibrous structures comprising solid additives are known in the art. U.S. Patent No. 4,885,202 discloses high-strength tissue products which are made with two outer tissue plies thermally bonded to a center layer of meltblown fibers. A composite tissue product comprises two outer tissue plies, each of which is intimately overall thermally bonded to a layer of meltblown fibers. The composite tissue product is additionally thermally bonded together at select points.

U.S. Patent No. 4,355,066 discloses an absorbent hydrophilic and oleophilic multipurpose composite towel material which has an inner absorbent layer of cellulosic material and outer layers of microfibrous polyolefin material on opposite sides of the inner layer. The outer layers are spot fusion bonded through the inner layer to produce a towel having exceptionally high void volume for improved absorbency.

U.S. Patent No. 5,431,643 sets out a fluid pervious web which is comprised of a nonwoven material for use as a topsheet on an absorbent article. The nonwoven web has a patterned network of pigmented fluid impervious areas thereon. Fluid deposited on the wearer-contacting surface of the web is moved laterally away from the pigmented fluid impervious areas and transported through the fluid pervious portions of the web. It leaves the pigmented fluid impervious areas of the web clean and dry. This structure is said to provide a topsheet that is tactilely perceived as soft prior to the discharge of bodily fluids thereon and also clean and dry after bodily fluids have been deposited thereon.

However, such prior art fibrous structures fall into one of the following camps. First, some prior art fibrous structures intimately mix solid additives, such as pulp fibers, with synthetic polymer filaments to form a fibrous structure. Such fibrous structures are oftentimes referred to as "co-form structures." Another camp includes fibrous structures that comprise solid additives that are intimately mixed with fibers, such as pulp fibers, to form a structure. Lastly, a third camp includes fibrous structures wherein solid additives are positioned between a pair of embossed paper-like layers. None of the prior art structures teach positioning solid additives between a nonwoven substrate and a bonding material, which is bonded to the nonwoven substrate at one or more bond sites thus creating areas that contain solid additives that are close to an outer surface of the fibrous structure and permit using lower levels of solid additives to achieve the benefits provided by the solid additives compared to prior art fibrous structures containing solid additives.

Accordingly, there is a need for a fibrous structure wherein a plurality of solid additives are positioned between a nonwoven substrate and a bonding material, which is bonded to the nonwoven substrate at one or more bond sites and a method for making same.

SUMMARY OF THE INVENTION

The present invention fulfills the need described above by providing a novel fibrous structure.

In one example of the present invention, a fibrous structure comprising a nonwoven substrate and a plurality of solid additives that are positioned between the nonwoven substrate and a bonding material, which may be a fibrous structure and/or film and/or adhesive, which is bonded to the nonwoven substrate at one or more bond sites, is provided.

Accordingly, the present invention provides a fibrous structure wherein solid additives are positioned between a nonwoven substrate and a bonding material, which is bonded to a nonwoven substrate at one or more bond sites.

BRIEF DESCRIPTION OF THE DRAWINGS

Fig. 1 is a schematic representation of one example of a fibrous structure in accordance with the present invention;
Fig. 2 is a cross-sectional view of the fibrous structure of Fig. 1 taken along line 2-2;
Fig. 3 is a schematic representation of one example of a method for making a fibrous structure according to the present invention; and
Fig. 4 is a flow diagram of one example of a method for making a fibrous structure according to the present invention.

## DETAILED DESCRIPTION OF THE INVENTION

<u>Definitions</u>

"Fibrous structure" as used herein means a structure that comprises one or more fibrous elements. In one example, a fibrous structure according to the present invention means an association of fibrous elements that together form a structure capable of performing a function.

The fibrous structures of the present invention may be homogeneous or may be layered. If layered, the fibrous structures may comprise at least two and/or at least three and/or at least four and/or at least five and/or at least six and/or at least seven and/or at least 8 and/or at least 9 and/or at least 10 to about 25 and/or to about 20 and/or to about 18 and/or to about 16 layers.

In one example, the fibrous structures of the present invention are disposable. For example, the fibrous structures of the present invention are non-textile fibrous structures. In another example, the fibrous structures of the present invention are flushable, such as toilet tissue.

Non-limiting examples of processes for making fibrous structures include known wet-laid papermaking processes, air-laid papermaking processes and wet, solution and dry filament spinning processes that are typically referred to as nonwoven processes. Further processing of the fibrous structure may be carried out such that a finished fibrous structure is formed. For example, in typical papermaking processes, the finished fibrous structure is the fibrous structure that is wound on the reel at the end of papermaking. The finished fibrous structure may subsequently be converted into a finished product, e.g. a sanitary tissue product.

"Fibrous element" as used herein means an elongate particulate having a length greatly exceeding its average diameter, i.e. a length to average diameter ratio of at least about 10. A fibrous element may be a filament or a fiber. In one example, the fibrous element is a single fibrous element rather than a yarn comprising a plurality of fibrous elements.

The fibrous elements of the present invention may be spun from polymer melt compositions via suitable spinning operations, such as meltblowing and/or spunbonding and/or they may be obtained from natural sources such as vegetative sources, for example trees.

The fibrous elements of the present invention may be monocomponent and/or multicomponent. For example, the fibrous elements may comprise bicomponent fibers and/or filaments. The bicomponent fibers and/or filaments may be in any form, such as side-by-side, core and sheath, islands-in-the-sea and the like.

"Filaments" as used herein means an elongate particulate as described above that exhibits a length of greater than or equal to 5.08 cm (2 in.) and/or greater than or equal to 7.62 cm (3 in.) and/or greater than or equal to 10.16 cm (4 in.) and/or greater than or equal to 15.24 cm (6 in.).

Filaments are typically considered continuous or substantially continuous in nature. Filaments are relatively longer than fibers. Non-limiting examples of filaments include meltblown and/or spunbond filaments. Non-limiting examples of polymers that can be spun into filaments include natural polymers, such as starch, starch derivatives, cellulose, such as rayon and/or lyocell, and cellulose derivatives, hemicellulose, hemicellulose derivatives, and synthetic polymers including, but not limited to thermoplastic polymer filaments, such as polyesters, nylons, polyolefins such as polypropylene filaments, polyethylene filaments, and biodegradable thermoplastic fibers such as polylactic acid filaments, polyhydroxyalkanoate filaments, polyesteramide filaments and polycaprolactone filaments.

"Fiber" as used herein means an elongate particulate as described above that exhibits a length of less than 5.08 cm (2 in.) and/or less than 3.81 cm (1.5 in.) and/or less than 2.54 cm (1 in.).

Fibers are typically considered discontinuous in nature. Non-limiting examples of fibers include pulp fibers, such as wood pulp fibers, and synthetic staple fibers such as polypropylene, polyethylene, polyester, copolymers thereof, rayon, glass fibers and polyvinyl alcohol fibers.

Staple fibers may be produced by spinning a filament tow and then cutting the tow into segments of less than 5.08 cm (2 in.) thus producing fibers.

In one example of the present invention, a fiber may be a naturally occurring fiber, which means it is obtained from a naturally occurring source, such as a vegetative source, for example a tree and/or plant. Such fibers are typically used in papermaking and are oftentimes referred to as papermaking fibers. Papermaking fibers useful in the present invention include cellulosic fibers commonly known as wood pulp fibers. Applicable wood pulps include chemical pulps, such as Kraft, sulfite, and sulfate pulps, as well as mechanical pulps including, for example, groundwood, thermomechanical pulp and chemically modified thermomechanical pulp. Chemical pulps, however, may be preferred since they impart a superior tactile sense of softness to tissue sheets made therefrom. Pulps derived from both deciduous trees (hereinafter, also referred to as "hardwood") and coniferous trees (hereinafter, also referred to as "softwood") may be utilized. The hardwood and softwood fibers can be blended, or alternatively, can be deposited in layers to provide a stratified web. Also applicable to the present invention are fibers derived from recycled paper, which may contain any or all of the above categories of fibers as well as other non-fibrous polymers such as fillers, softening agents, wet and dry strength agents, and adhesives used to facilitate the original papermaking.

In addition to the various wood pulp fibers, other cellulosic fibers such as cotton linters, rayon, lyocell and bagasse fibers can be used in the fibrous structures of the present invention.

"Sanitary tissue product" as used herein means a soft, low density (i.e. < about 0.15 g/cm3) fibrous structure useful as a wiping implement for post-urinary and post-bowel movement cleaning (toilet tissue), for otorhinolaryngological discharges (facial tissue), and multi-functional absorbent and cleaning uses (absorbent towels). The sanitary tissue product may be convolutedly wound upon itself about a core or without a core to form a sanitary tissue product roll.

In one example, the sanitary tissue product of the present invention comprises one or more fibrous structures according to the present invention.

The sanitary tissue products of the present invention may exhibit a basis weight between about 10 $g/m^2$ to about 120 $g/m^2$ and/or from about 15 $g/m^2$ to about 110 $g/m^2$ and/or from about 20 $g/m^2$ to about 100 $g/m^2$ and/or from about 30 to 90 $g/m^2$ In addition, the sanitary tissue product of the present invention may exhibit a basis weight between about 40 $g/m^2$ to about 120 $g/m^2$ and/or from about 50 $g/m^2$ to about 110 $g/m^2$ and/or from about 55 $g/m^2$ to about 105 $g/m^2$ and/or from about 60 to 100 $g/m^2$.

The sanitary tissue products of the present invention may exhibit a total dry tensile strength of greater than about 59 g/cm (150 g/in) and/or from about 78 g/cm (200 g/in) to about 394 g/cm (1000 g/in) and/or from about 98 g/cm (250 g/in) to about 335 g/cm (850 g/in). In addition, the sanitary tissue product of the present invention may exhibit a total dry tensile strength of greater than about 196 g/cm (500 g/in) and/or from about 196 g/cm (500 g/in) to about 394 g/cm (1000 g/in) and/or from about 216 g/cm (550 g/in) to about 335 g/cm (850 g/in) and/or from about 236 g/cm (600 g/in) to about 315 g/cm (800 g/in). In one example, the sanitary tissue product exhibits a total dry tensile strength of less than about 394 g/cm (1000 g/in) and/or less than about 335 g/cm (850 g/in).

In another example, the sanitary tissue products of the present invention may exhibit a total dry tensile strength of greater than about 500 g/in and/or greater than about 600 g/in and/or greater than about 700 g/in and/or greater than about 800 g/in and/or greater than about (900 g/in) and/or greater than about 394 g/cm (1000 g/in) and/or from about 315 g/cm (800 g/in) to about 1968 g/cm (5000 g/in) and/or from about 354 g/cm (900 g/in) to about 1181 g/cm (3000 g/in) and/or from about 354 g/cm (900 g/in) to about 984 g/cm (2500 g/in) and/or from about 394 g/cm (1000 g/in) to about 787 g/cm (2000 g/in).

The sanitary tissue products of the present invention may exhibit an initial total wet tensile strength of less than about 78 g/cm (200 g/in) and/or less than about 59 g/cm (150 g/in) and/or less than about 39 g/cm (100 g/in) and/or less than about 29 g/cm (75 g/in) and/or less than about 23 g/cm (60 g/in).

The sanitary tissue products of the present invention may exhibit an initial total wet tensile strength of greater than about 118 g/cm (300 g/in) and/or greater than about 157 g/cm (400 g/in) and/or greater than about 196 g/cm (500 g/in) and/or greater than about 236 g/cm (600 g/in) and/or greater than about 276 g/cm (700 g/in) and/or greater than about 315 g/cm (800 g/in) and/or greater than about 354 g/cm (900 g/in) and/or greater than about 394 g/cm (1000 g/in) and/or from about 118 g/cm (300 g/in) to about 1968 g/cm (5000 g/in) and/or from about 157 g/cm (400 g/in) to about 1181 g/cm (3000 g/in) and/or from about 196 g/cm (500 g/in) to about 984 g/cm (2500 g/in) and/or from about 196 g/cm (500 g/in) to about 787 g/cm (2000 g/in) and/or from about 196 g/cm (500 g/in) to about 591 g/cm (1500 g/in).

The sanitary tissue products of the present invention may exhibit a density of less than about 0.60 $g/cm^3$ and/or less than about 0.30 $g/cm^3$ and/or less than about 0.20 $g/cm^3$ and/or less than about 0.10 $g/cm^3$ and/or less than about 0.07 $g/cm^3$ and/or less than about 0.05 $g/cm^3$ and/or from about 0.01 $g/cm^3$ to about 0.20 $g/cm^3$ and/or from about 0.02 $g/cm^3$ to about 0.10 $g/cm^3$.

The sanitary tissue products of the present invention may exhibit a total absorptive capacity of according to the Horizontal Full Sheet (HFS) Test Method described herein of greater than about 10 g/g and/or greater than about 12 g/g and/or greater than about 15 g/g and/or from about 15 g/g to about 50 g/g and/or to about 40 g/g and/or to about 30 g/g.

The sanitary tissue products of the present invention may exhibit a Vertical Full Sheet (VFS) value as determined by the Vertical Full Sheet (VFS) Test Method described herein of greater than about 5 g/g and/or greater than about 7 g/g and/or greater than about 9 g/g and/or from about 9 g/g to about 30 g/g and/or to about 25 g/g and/or to about 20 g/g and/or to about 17 g/g.

The sanitary tissue products of the present invention may be in the form of sanitary tissue product rolls. Such sanitary tissue product rolls may comprise a plurality of connected, but perforated sheets of fibrous structure, that are separably dispensable from adjacent sheets.

The sanitary tissue products of the present invention may comprise additives such as softening agents, temporary wet strength agents, permanent wet strength agents, bulk softening agents, lotions, silicones, wetting agents, latexes, patterned latexes and other types of additives suitable for inclusion in and/or on sanitary tissue products.

"Scrim" as used herein means a material that is used to overlay solid additives within the fibrous structures of the present invention such that the solid additives are positioned between the material and a nonwoven substrate of the fibrous structures. In one example, the scrim covers the solid additives such that they are positioned between the scrim and the nonwoven substrate of the fibrous structure. In another example, the scrim is a minor component relative to the nonwoven substrate of the fibrous structure.

"Hydroxyl polymer" as used herein includes any hydroxyl-containing polymer that can be incorporated into a fibrous structure of the present invention, such as into a fibrous structure in the form of a fibrous element. In one example, the hydroxyl polymer of the present invention includes greater than 10% and/or greater than 20% and/or greater than 25% by weight hydroxyl moieties. In another example, the hydroxyl within the hydroxyl-containing polymer is not part of a larger functional group such as a carboxylic acid group.

"Non-thermoplastic" as used herein means, with respect to a material, such as a fibrous element as a whole and/or a polymer within a fibrous element, that the fibrous element and/or polymer exhibits no melting point and/or softening point, which allows it to flow under pressure, in the absence of a plasticizer, such as water, glycerin, sorbitol, urea and the like.

"Thermoplastic" as used herein means, with respect to a material, such as a fibrous element as a whole and/or a polymer within a fibrous element, that the fibrous element and/or polymer exhibits a melting point and/or softening point at a certain temperature, which allows it to flow under pressure.

"Non-cellulose-containing'' as used herein means that less than 5% and/or less than 3% and/or less than 1% and/or less than 0.1% and/or 0% by weight of cellulose polymer, cellulose derivative polymer and/or cellulose copolymer is present in fibrous element. In one example, "non-cellulose-containing" means that less than 5% and/or less than 3% and/or less than 1% and/or less than 0.1% and/or 0% by weight of cellulose polymer is present in fibrous element.

"Associate," "Associated," "Association," and/or "Associating" as used herein with respect to fibrous elements means combining, either in direct contact or in indirect contact, fibrous elements such that a fibrous structure is formed. In one example, the associated fibrous elements may be bonded together for example by adhesives and/or thermal bonds. In another example, the fibrous elements may be associated with one another by being deposited onto the same fibrous structure making belt.

"Weight average molecular weight" as used herein means the weight average molecular weight as determined using gel permeation chromatography according to the protocol found in Colloids and Surfaces A. Physio Chemical & Engineering Aspects, Vol. 162, 2000, pg. 107-121.

"Basis Weight" as used herein is the weight per unit area of a sample reported in lbs/3000 ft$^2$ or g/m$^2$.

"Machine Direction" or "MD" as used herein means the direction parallel to the flow of the fibrous structure through the papermaking machine and/or product manufacturing equipment.

"Cross Machine Direction" or "CD" as used herein means the direction perpendicular to the machine direction in the same plane of the fibrous structure and/or paper product comprising the fibrous structure.

"Ply" or "Plies" as used herein means an individual fibrous structure optionally to be disposed in a substantially contiguous, face-to-face relationship with other plies, forming a multiple ply fibrous structure. It is also contemplated that a single fibrous structure can effectively form two "plies," or multiple "plies", for example, by being folded on itself.

As used herein, the articles "a" and "an" when used herein, for example, "an anionic surfactant" or "a fiber" is understood to mean one or more of the material that is claimed or described.

All percentages and ratios are calculated by weight unless otherwise indicated. All percentages and ratios are calculated based on the total composition unless otherwise indicated.

Unless otherwise noted, all component or composition levels are in reference to the active level of that component or composition, and are exclusive of impurities, for example, residual solvents or by-products, which may be present in commercially available sources.

Nonwoven Substrate

Non-limiting examples of suitable nonwoven substrates useful in the present invention include fibrous structures, films and mixtures thereof. In one example, the nonwoven substrate comprises a fibrous structure. The fibrous structure may comprise fibrous elements comprising a hydroxyl polymer. In another example, the fibrous structure may comprise starch and/or starch derivative filaments. The starch filaments may further comprise polyvinyl alcohol. In yet another example, the fibrous structure may comprise a thermoplastic polymer. In another example, the nonwoven substrate comprises polypropylene filaments.

The fibrous elements of the present invention may be produced from a polymer melt composition comprising a hydroxyl polymer, such as an uncrosslinked starch, a crosslinking system comprising a crosslinking agent, such as an imidazolidinone, and water. The polymer melt composition may also comprise quaternary ammonium compounds. Non-limiting examples of suitable quaternary ammonium compounds include mono-quaternary ammonium compounds and diquaternary ammonium compounds, such as balanced and unbalanced diquaternary ammonium compounds. In one example, the polymer melt comprises Arquad HTL8-MS commercially available from Akzo Nobel.

The nonwoven substrate may exhibit a basis weight of greater than about 10 and/or greater than 15 and/or greater than 20 and/or greater than 25 and/or greater than 30 g/m$^2$ and/or less than about 100 and/or less than about 80 and/or less than about 60 and/or less than about 50 g/m$^2$. In one example, the nonwoven substrate exhibits a basis weight of from about 10 to about 100 g/m$^2$ and/or from about 15 to about 80 g/m$^2$.

Solid Additives

"Solid additive" as used herein means an additive that is capable of being applied to a surface of a fibrous structure in a solid form. In other words, the solid additive of the present invention can be delivered directly to a surface of a nonwoven substrate without a liquid phase being present, i.e. without melting the solid additive and without suspending the solid additive in a liquid vehicle or carrier. As such, the solid additive of the present invention does not require a liquid state or a liquid vehicle or carrier in order to he delivered to a surface of a nonwoven substrate. The solid additive of the present invention may be delivered via a gas or combinations of gases. In one example, in simplistic terms, a solid additive is an additive that when placed within a container, does not take the shape of the container.

Non-limiting example, of suitable solid additives include hydrophilic inorganic particles, hydrophilic organic particle, hydrophobic inorganic particles, hydrophobic organic particles, naturally occurring fibers, non-naturally occurring particles and non-naturally occurring fibers.

In one example, the naturally occurring fibers may comprise wood pulp fibers, trichomes, seed hairs, protein fibers, such as silk and/or wool, and/or cotton linters. In one example, the solid additive comprises chemically treated pulp fibers. Non-limiting examples of chemically treated pulp fibers are commercially available from Georgia-Pacific Corporation.

In another example, the non-naturally occurring fibers may comprise polyolefin fibers, such as polypropylene fibers, and/or polyamide fibers.

In another example, the hydrophilic inorganic particles are selected from the group consisting of: clay, calcium carbonate, titanium dioxide, talc, aluminum silicate, calcium silicate, alumina trihydrate, activated carbon, calcium sulfate, glass microspheres, diatomaceous earth and mixtures thereof.

In one example, hydrophilic organic particles of the present invention may include hydrophobic particles the surfaces of which have been treated by a hydrophilic material. Non-limiting examples of such hydrophilic organic particles include polyesters, such as polyethylene terephtalate particles that have been surface treated with a soil release polymer and/or surfactant. Another example is a polyolefin particle that has been surface treated with a surfactant.

In another example, the hydrophilic organic particles may comprise superabsorbent particles and/or superabsorbent materials such as hydrogels, hydrocolloidal materials and mixtures thereof. In one example, the hydrophilic organic particle comprises polyacrylate: Other Non-limiting examples of suitable hydrophilic organic particles are known in the art.

In another example, the hydrophilic organic particles may comprise high molecular weight starch particles (high amylose-containing starch particles), such as Hylon 7 available from National Starch and Chemical Company.

In another example, the hydrophilic organic particles may comprise cellulose particles.

In another example, the hydrophilic organic particles may comprise compressed cellulose spongeparticles.

In one example of a solid additive in accordance with the present invention, the solid additive exhibits a surface tension of greater than about 30 and/or greater than about 35 and/or greater than about 40 and/or greater than about 50 and/or greater than about 60 dynes/cm as determined by ASTM D2578.

The solid additives of the present invention may have different geometries and/or cross-sectional areas that include round, elliptical, star-shaped, rectangular, trilobal and other various eccentricities.

In one example, the solid additive may exhibit a particle size of less than 6 mm and/or less than 5.5 mm and/or less than 5 mm and/or less than 4.5 mm and/or less than 4 mm and/or less than 2 mm in its maximum dimension.

"Particle" as used herein means an object having an aspect ratio of less than about 25/1 and/or less than about 15/1 and/or less than about 10/1 and/or less than 5/1 to about 1/1. A particle is not a fiber as defined herein.

The solid additives may be present in the fibrous structures of the present invention at a level of greater than about 1 and/or greater than about 2 and/or greater than about 4 and/or to about 20 and/or to about 15 and/or to about 10 g/m$^2$. In one example, a fibrous structure of the present invention comprises from about 2 to about 10 and/or from about 5 to about 10 g/m$^2$ of solid additive.

In one example, the solid additives are present in the fibrous structures of the present invention at a level of greater than 5% and/or greater than 10% and/or greater than 20% to about 50% and/or to about 40% and/or to about 30%.

Bonding Material

The bonding material may comprise any suitable material capable of bonding to the nonwoven substrate of the present invention. In one example, the bonding material comprises a material that can be thermally bonded to the nonwoven substrate of the present invention. In one example, the bonding material is non-thermoplastic. Non-limiting examples of suitable bonding materials include filaments of the present invention. In one example, the bonding material comprises filaments that comprise hydroxyl polymers. In another example, the bonding material comprises starch filaments. In yet another example, the bonding material comprises filaments comprising a thermoplastic polymer. In still another example, the bonding material comprises a fibrous structure according to the present invention wherein the fibrous structure comprises filaments comprising hydroxyl polymers, such as starch filaments, and/or thermoplastic polymers. In another example, the bonding material may comprise a film. In another example, the bonding material may comprise a nonwoven substrate according to the present invention. In even another example, the bonding material may comprise a latex.

In one example, the bonding material may be the same composition as the nonwoven substrate.

The bonding material may be present in the fibrous structures of the present invention at a basis weight of greater than 0.1 and/or greater than 0.3 and/or greater than 0.5 and/or greater than 1 and/or greater than 2 $g/m^2$ and/or less than 10 and/or less than 7 and/or less than 5 and/or less than 4 $g/m^2$.

Polymers

The fibrous elements, such as filaments and/or fibers, of the present invention that associate to form the fibrous structures of the present invention may contain various types of polymers such as hydroxyl polymers, non-thermoplastic polymers, thermoplastic polymers and mixtures thereof.

a. Hydroxy Polymers - Non-limiting examples of hydroxyl polymers in accordance with the present invention include polyols, such as polyvinyl alcohol, polyvinyl alcohol derivatives, polyvinyl alcohol copolymers, starch, starch derivatives, starch copolymers, chitosan, chitosan derivatives, chitosan copolymers, cellulose, cellulose derivatives such as cellulose ether and ester derivatives, cellulose copolymers, hemicellulose, hemicellulose derivatives, hemicellulose copolymers, gums, arabinans, galactans, proteins and various other polysaccharides and mixtures thereof.

In one example, a hydroxyl polymer of the present invention is a polysaccharide.

In another example, a hydroxyl polymer of the present invention is a non-thermoplastic polymer.

The hydroxyl polymer may have a weight average molecular weight of from about 10,000 g/mol to about 40,000,000 g/mol and/or greater than about 100,000 g/mol and/or greater than about 1,000,000 g/mol and/or greater than about 3,000,000 g/mol and/or greater than about 3,000,000 g/mol to about 40,000,000 g/mol. Higher and lower molecular weight hydroxyl polymers may be used in combination with hydroxyl polymers having a certain desired weight average molecular weight.

Well known modifications of hydroxyl polymers, such as natural starches, include chemical modifications and/or enzymatic modifications. For example, natural starch can be acid-thinned, hydroxy-ethylated, hydroxy-propylated, and/or oxidized. In addition, the hydroxyl polymer may comprise dent corn starch hydroxyl polymer.

Polyvinyl alcohols herein can be grafted with other monomers to modify its properties. A wide range of monomers has been successfully grafted to polyvinyl alcohol. Non-limiting examples of such monomers include vinyl acetate, styrene, acrylamide, acrylic acid, 2-hydroxyethyl methacrylate, acrylonitrile, 1,3-butadiene, methyl methacrylate, methacrylic acid, vinylidene chloride, vinyl chloride, vinyl amine and a variety of acrylate esters. Polyvinyl alcohols comprise the various hydrolysis products formed from polyvinyl acetate. In one example the level of hydrolysis of the polyvinyl alcohols is greater than 70% and/or greater than 88% and/or greater than 95% and/or about 99%.

"Polysaccharides" as used herein means natural polysaccharides and polysaccharide derivatives and/or modified polysaccharides. Suitable polysaccharides include, but are not limited to, starches, starch derivatives, chitosan, chitosan derivatives, cellulose, cellulose derivatives, hemicellulose, hemicellulose derivatives, gums, arabinans, galactans and mixtures thereof. The polysaccharide may exhibit a weight average molecular weight of from about 10,000 to about 40,000,000 g/mol and/or greater than about 100,000 and/or greater than about 1,000,000 and/or greater than about 3,000,000 and/or greater than about 3,000,000 to about 40,000,000.

Non-cellulose and/or non-cellulose derivative and/or non-cellulose copolymer hydroxyl polymers, such as non-cellulose polysaccharides may be selected from the group consisting of: starches, starch derivatives, chitosan, chitosan derivatives, hemicellulose, hemicellulose derivatives, gums, arabinans, galactans and mixtures thereof.

b. Thermoplastic Polymer - Non-limiting examples of suitable thermoplastic polymers include polyolefins, polyesters, copolymers thereof, and mixtures thereof. Non-limiting examples of polyolefins include polypropylene, polyethylene and mixtures thereof. A Non-limiting example of a polyester includes polyethylene terephthalate.

The thermoplastic polymers may comprise a non-biodegradable polymer, examples of such include polypropylene, polyethylene and certain polyesters; and the thermoplastic polymers may comprise a biodegradable polymer, examples of such include polylactic acid, polyhydroxyalkanoate, polycaprolactone, polyesteramides and certain polyesters.

The thermoplastic polymers of the present invention may be hydrophilic or hydrophobic. The thermoplastic polymers may be surface treated and/or internally treated to change the inherent hydrophilic or hydrophobic properties of the thermoplastic polymer.

Any suitable weight average molecular weight for the thermoplastic polymers may be used. For example, the weight average molecular weight for a thermoplastic polymer in accordance with the present invention is greater than about 10,000 g/mol and/or greater than about 40,000 g/mol and/or greater than about 50,000 g/mol and/or less than about 500,000 g/mol and/or less than about 400,000 g/mol and/or less than about 200,000 g/mol.

In one example, the fibrous element of the present invention is void of thermoplastic, water-insoluble polymers.

Fibrous Structures

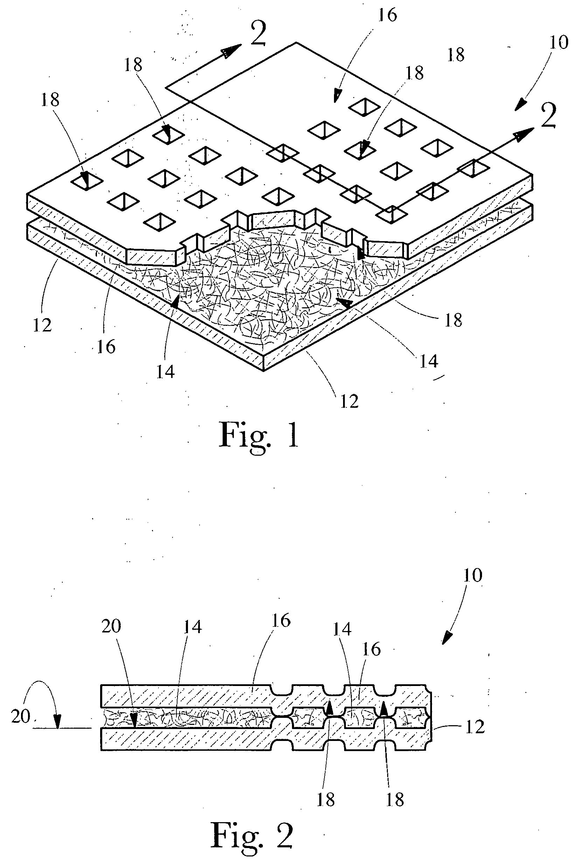

As shown in Figs. 1 and 2, the fibrous structure 10 of the present invention may comprise a nonwoven substrate 12, a plurality of solid additives 14 that are positioned between the nonwoven substrate 12 and a bonding material 16 which is bonded to the nonwoven substrate 12 at one or more bond sites 18. The bond site 18 is where at least a portion of the bonding material 16 and a portion of the nonwoven substrate 12 are connected to one another, such as via a thermal bond, or a bond created by applying high pressure to both the bonding material 16 and the nonwoven substrate 12 such that a glassining effect occurs.

The nonwoven substrate 12 comprises a plurality of filaments comprising a hydroxyl polymer. The hydroxyl polymer is selected from the group consisting of polyvinyl alcohol, derivatives thereof and mixtures thereof. In one example, the hydroxyl polymer comprises a starch and/or starch derivative. The nonwoven substrate 12 may exhibit a basis weight of greater than about 10 $g/m^2$ and/or greater than about 14 $g/m^2$ and/or greater than about 20 $g/m^2$ and/or greater than about 25 $g/m^2$ and/or greater than about 30 $g/m^2$ and/or greater than about 35 $g/m^2$ and/or greater than about 40 $g/m^2$ and/or less than about 100 $g/m^2$ and/or less than about 90 $g/m^2$ and/or less than about 80 $g/m^2$.

In one example, the solid additives 14 comprise fibers, for example wood pulp fibers. The wood pulp fibers may be softwood pulp fibers and/or hardwood pulp fibers. In one example, the wood pulp fibers comprise eucalyptus pulp fibers. In another example, the wood pulp fibers comprise Southern Softwood Kraft (SSK) pulp fibers

The solid additives 14 may be chemically treated. In one example, the solid additives 14 comprise softening agents and/or are surface treated with softening agents. Non-limiting examples of suitable softening agents include silicones and/or quaternary ammonium compounds, such as PROSOFT® available from Hercules Incorporated. In one example, the solid additives 14 comprise a wood pulp treated with a quaternary ammonium compound softening agent, an example of which is available from Georgia-Pacific Corporation. One advantage of applying a softening agent only to the solid additives versus applying it to the entire fibrous structure and/or nonwoven substrate and/or bonding material, ensures that the softening agent softens those components of the entire fibrous structure that need softening compared to the other components of the entire fibrous structure.

In one example, the solid additives 14 may be uniformly distributed on a surface 20 of the nonwoven substrate 12.

In one example, the bonding material 16 comprises filaments, a fibrous structure and/or a film. In one example, the bonding materials 16 comprises a fibrous structure comprising a plurality of filaments. The fibrous structure may comprise a plurality of filaments comprising a hydroxyl polymer. The hydroxyl polymer may be selected from the group consisting of polysaccharides, derivatives thereof, polyvinyl alcohol, derivatives thereof and mixtures thereof. In one example, the hydroxyl polymer comprises a starch and/or starch derivative. The bonding material 16 may comprise a fibrous structure comprising a plurality of the starch filaments. The bonding niaterial 16 may be present at a basis weight of from about 0.1 to about 4 $g/m^2$.

In another example, the bonding material 16 comprises latex. The latex may be applied as a continuous network to the solid additives 14 and the nonwoven substrate 12.

One purpose of the bonding material 16 is to reduce the lint produced by the fibrous structure by inhibiting the solid additives 14 from becoming disassociated from the fibrous structure. The bonding material 16 may also provide additional strength properties to the fibrous structure.

As shown in Figs. 1 and 2, the bond sites 18 may comprise a plurality of discrete bond sites. The discrete bond sites may be present in the form of a non-random repeating pattern. One or more bond sites 18 may comprise a thermal bond and/or a pressure bond.

The fibrous structure of the present invention may exhibit a wet coefficient of friction ratio of greater than 0.20 and/or greater than 0.30 and/or less than 0.75 and/or less than 0.60 as measured according to the Wet Coefficient of Friction (COF) Ratio Test described herein.

Table 1 below shows examples of wet coefficient of friction (COF) ratios for fibrous structures of the present invention and comparative fibrous structures.

Table 1

| Sample | Wet COF Ratio | Wet COF Ratio | Wet COF Ratio | Wet COF Ratio | Wet COF Ratio |
|---|---|---|---|---|---|
| Invention Sample 1 | 0.36 | 0.38 | 0.42 | 0.35 | 0.42 |
| Invention Sample 2 | 0.36 | 0.35 | 0.42 | 0.35 | 0.37 |
| Prior Art 1 | 0.15 | 0.15 | 0.16 | 0.14 | 0.17 |

(continued)

| Sample | Wet COF Ratio | Wet COF Ratio | Wet COF Ratio | Wet COF Ratio | Wet COF Ratio |
|---|---|---|---|---|---|
| Prior Art 2 | 0.16 | 0.17 | NA | NA | 0.18 |
| Prior Art 3 (Charmin® Ultra Strong) | 0.77 | 0.82 | 1.10 | NA | NA |
| Prior Art 4 (Charmin® Ultra Soft) | 1.02 | 0.88 | 1.02 | 1.02 | NA |

The fibrous structure of the present invention may comprise a wet web-web COF ratio of greater than 0.7 and/or greater than 0.9 and/or greater than 1.0 and/or greater than 1.2 as measured according to the Wet Coefficient of Friction (COF) Ratio Test Method described herein.

The fibrous structure of the present invention may comprise a surface softening agent. The surface softening agent may be applied to a surface of the fibrous structure. The softening agent may comprise a silicone and/or a quaternary ammonium compound.

In one example, the fibrous structure comprises a nonwoven substrate, which has a plurality of solid additives present on both of the nonwoven substrates opposite surfaces that are positioned between the nonwoven substrate surfaces and a bonding material that is bonded to each of the nonwoven substrates. The solid additives may be different or the same and may be present at different levels or at same levels and may be uniformly distributed on the opposite surfaces of the nonwoven substrate. The bonding material may be different or the same and may be present at different levels or at same levels and be bonded to opposite surfaces of the nonwoven substrate at one or more bond sites.

In another example, the fibrous structure comprises the solid additives positioned on opposite surfaces of the nonwoven substrate and the bonding material bonded to the opposite surfaces of the nonwoven substrate at one or more bond sites such that the solid additives are positioned between the bonding material and the nonwoven substrate.

In another example, the fibrous structure of the present invention may comprise one ply within a multi-ply sanitary tissue product.

In another example, a multi-ply sanitary tissue product comprising two or more plies of the fibrous structure according to the present invention is provided. In one example the two or more plies are combined to form a multi-ply sanitary tissue product such that the solid additives are adjacent to at least one outer surface and/or each of the outer surfaces of the multi-ply sanitary tissue product.

In one examples, the fibrous structure of the present invention exhibits a Free Fiber End Count of greater than 40 and/or greater than 50 in the range of free fiber end lengths of from about 0.1 mm to about 0.25 mm as determined by the Free Fiber End Test Method.

Methods for Making Fibrous Structure

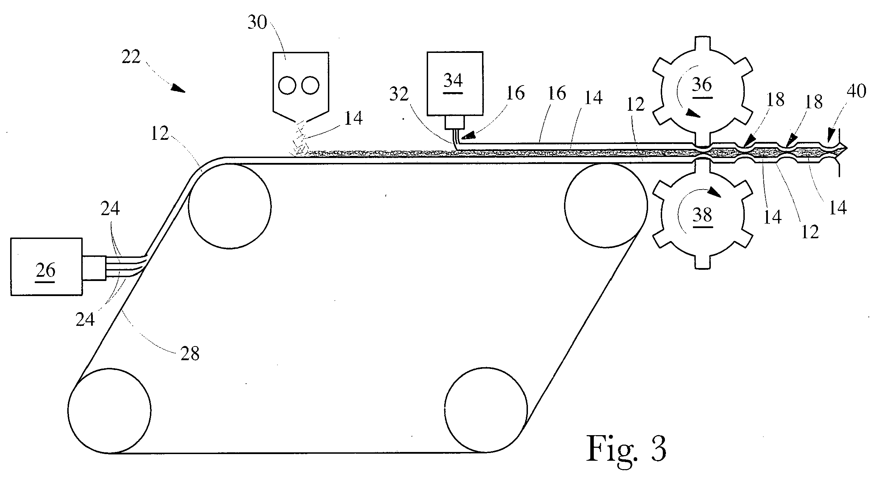

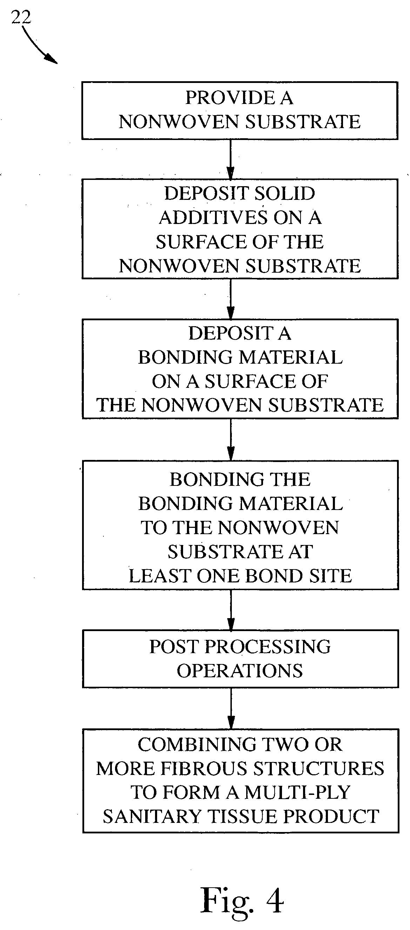

Figs. 3 and 4 illustrate one example of a method for making a fibrous structure of the present invention. As shown in Figs. 3 and 4, the method 22 comprises a step of bonding a bonding material 16 to a nonwoven substrate 12 at one or more bond sites 18 such that a plurality of solid additives 14 present on the nonwoven substrate 12 are positioned between the bonding material 16 and the nonwoven substrate 12. The method may further comprise the steps of:

    a. providing a nonwoven substrate;
    b. depositing a plurality of solid additives onto the nonwoven substrate; and/or
    c. contacting the solid additives with a bonding material.

In one example, the step of providing a nonwoven substrate 12 may comprise providing a parent roll (not shown) of a nonwoven substrate 12 and unrolling the nonwoven substrate 12 to make it accessible for deposition of the solid additives 14 onto it. In another example, the step of providing a nonwoven substrate 12 may comprise the step of spinning a polymer composition to form fibrous elements, such as filaments 24, from a die 26. The filaments 24 may be collected on a collection device, such as a belt 28, to form a nonwoven substrate 12. The die 26 may comprise at least one filament-forming hole, and/or 2 or more and/or 3 or more rows of filament-forming holes from which filaments 24 are spun. At least one row of the filament-forming holes contains 2 or more and/or 3 or more and/or 10 or more filament-forming holes. In addition to the filament-forming holes, the die 26 comprises fluid-releasing holes, such as gas-releasing holes, in one example air-releasing holes, that provide attenuation to the filaments formed from the filament-forming holes. One or more fluid-releasing holes may be associated with a filament-forming hole such that the fluid exiting the fluid-releasing hole is parallel or substantially parallel (rather than angled like a knife-edge die) to an exterior surface of a filament 24 exiting the filament-forming hole. In one example, the fluid exiting the fluid-releasing hole contacts the exterior surface of a filament formed from a filament-forming hole at an angle of less than 30° and/or less than 20° and/or less than 10° and/or less than 5° and/or about 0°. One or more fluid releasing holes may be arranged around a filament-forming hole. In one example; one or more fluid-releasing holes are associated with a single filament-forming hole such that the fluid exiting the one or more fluid releasing holes, contacts the exterior surface of single filament 24 formed from the single filament-forming hole. In one example, the fluid-releasing hole permits a fluid, such as a gas, for example air, to contact the exterior surface of a filament- 24 formed from a filament-forming hole rather than contacting an inner surface of a filament 24, such as what happens when a hollow filament is formed.

In one examples, the step of depositing a plurality of solid additives 14 onto the nonwoven substrate 12 may comprises airlaying the solid additives 14 using an airlaying former 30. A non-limiting example of a suitable airlaying former 30 is available from Dan-Web of Aarhus, Denmark.

In one example, the step of contacting the solid additives 14 with a bonding material 16 comprises the step of depositing one or more filaments 32 of bonding material 16 produced from a die 34 such that the bonding material 16 contacts at least a portion (in one example all or substantially all) of the solid additives 14 thus positioning the solid additives 14 between the bonding material 16 and the nonwoven substrate 12. A plurality of the filaments 32 may become associated with one another to form a fibrous structure. Once the bonding material 16 is in place, the step of bonding 24 the bonding material 16 to the nonwoven substrate 12 occurs.

The step of bonding may comprise a thermal bonding operation. The thermal bonding operation may comprise passing the fibrous structure through a nip formed by thermal bonding rolls 36, 38. At least one of the thermal bonding rolls 36, 38 may comprise a pattern that is translated into the bond sites 18 formed in the fibrous structure 40.

As shown in Fig. 4, the fibrous structure may also be subjected to other post-processing operations such as embossing, tuft-generating operations, gear rolling, which includes passing the fibrous structure 40 through a nip formed between two engaged gear rolls, moisture-imparting operations, free-fiber end generating operations, and surface treating operations to form a finished fibrous structure. In one example, the fibrous structure 40 is subjected to gear rolling by passing the fibrous structure 40 through a nip formed by at least a pair of gear rolls. In one example, the fibrous structure is subjected to gear rolling such that free-fiber ends are created in the fibrous structure. The gear rolling may occur before or after occurs after two or more fibrous structures are combined to form a multi-ply sanitary tissue product.. If it occurs after, then the multi-ply sanitary tissue product is passed through the nip formed by at least a pair of gear rolls.

The method for making a fibrous structure of the present invention 22 may be close coupled (where the fibrous structure is convolutedly wound into a roll prior to proceeding to a converting operation) or directly coupled (where the fibrous structure is not convolutedly wound into a roll prior to proceeding to a converting operation) with a converting operation to emboss, print, deform, surface treat, or other post-forming operation known to those in the art. For purposes of the present invention, direct coupling means that the fibrous structure 40 can proceed directly into a converting operation rather than, for example, being convolutedly wound into a roll and then unwound to proceed through a converting operation.

In one example, one or more plies of the fibrous structure according to the present invention may be combined with another ply of fibrous structure, which may also be a fibrous structure according to the present invention, to form a multi-ply sanitary tissue product as shown in step 44. In one example, the multi-ply sanitary tissue product may be formed by combining two or more plies of fibrous structure according to the present invention. In another example, two or more plies of fibrous structure according to the present invention may be combined to form a multi-ply sanitary tissue product such that the solid additives present in the fibrous structure plies are adjacent to each of the outer surfaces of the multi-ply sanitary tissue product.

The process of the present invention may include preparing individual rolls of fibrous structure and/or sanitary tissue product comprising such fibrous structure(s) that are suitable for consumer use.

Non-limiting Example of a Fibrous Structure

Example 1 - Fibrous Structure comprising Starch Filaments/Wood Pulp Fibers/Bonding Material

A polymer melt composition comprising 10% Mowiol 10-98 commercially available from Kuraray Co. (polyvinyl alcohol), 39.25% Ethylex 2035 commercially available from Tate & Lyle (starch derivative), 39.25% Eclipse G commercially available from Tate & Lyle (starch), 0.7% Arquad HTL8-MS (hydrogenated tallow alkyl (2-ethylhexyl) dimethyl quaternary ammonium methosulfate commercially available from Akzo Chemicals, Inc., 6.9% Urea glyoxal adduct crosslinking agent, and 3.9% Ammonium Chloride available from Aldrich is prepared. The melt composition is cooked and extruded from a co-rotating twin screw extruder at approx 50% solids (50% $H_2O$).

The melt composition is then pumped to a meltblown spinnerette and attenuated with a 160°F saturated air stream to form a nonwoven substrate having a basis weight of from about 10 g/m$^2$ to about 100 g/m$^2$. The filaments are then dried by convection drying before being deposited on a forming belt to form a filament web. These meltblown filaments are essentially continuous filaments.

Wood pulp fibers, Southern Softwood Kraft available as roll comminution pulp, is disintegrated by a hammermill and conveyed to an airlaid former via a blower. The wood pulp fibers are deposited onto the nonwoven substrate as a solid additive.

A bonding material, such as a plurality of filaments that associate to form a fibrous structure having the same make up and made by the same process as the nonwoven substrate above, except that the fibrous structure exhibits a basis weight of from about 0.1. g/m$^2$ to about 10 g/m$^2$ is provided. The filaments and resulting fibrous structure is laid down on the solid additives, which are already on a surface of the nonwovens substrate to form a second fibrous structure.

The second fibrous structure is then subjected to a bonding process wherein the bond sites are formed between the nonwoven substrate and the bonding material such that the wood pulp fibers are positioned between the nonwoven substrate and the bonding material.

Test Methods

Unless otherwise specified, all tests described herein including those described under the Definitions section and the following test methods are conducted on samples that have been conditioned in a conditioned room at a temperature of 73°F $\pm$ 4°F (about 23°C $\pm$ 2.2°C) and a relative humidity of 50% $\pm$ 10% for 2 hours prior to the test. All tests are conducted in such conditioned room.

Basis Weight Test Method

Basis weight is measured by cutting one or more sample usable units to a specific area (m$^2$) with a required area precision of less than 2%. A summed sample area of at least 0.005 m$^2$ is required. The summed sample area is weighed on a top loading balance with a minimum resolution of 0.001 g. The balance is protected from air drafts and other disturbances using a draft shield.

Weights are recorded when the readings on the balance become constant. Basis weight (grams/m$^2$) is calculated by dividing the weight of the summed sample area (grams) by the total summed area (m$^2$).

Wet Coefficient of Friction (COF) Ratio Test Method

a. Equipment and Test Materials

The wet COF ratio of a fibrous structure is measured using the following equipment and materials: a Thwing-Albert. Vantage Materials Tester (Thwing-Albert Instrument Company, 14 W. Collings Ave. West Berlin, NJ 08091) along with a horizontal platform, pulley, and connecting wire (Thwing-Albert item# 769-3000). A 5000 gram capacity load cell is used, accurate to $\pm$0.25% of the measuring value. Cross-head position is accurate to 0.01% per inch (2.54 cm) of travel distance.

The platform, is horizontally level, 20 inches long by 6 inches wide (50.8 cm long by 15.24 cm wide). The pulley is 1.5 inches (3.81 cm) diameter and is secured to the platform directly below the load cell (which moves vertically) in a position such that the connecting wire (approximately 25 inches long (63.5 cm long)) is vertically straight from its load cell connection point to its contact with the pulley, and horizontally level from the pulley to a sled. A sheet of abrasive cloth (utility cloth sheet, aluminum oxide P120) approximately 3 inches wide by 6 inches long (7.62 cm wide by 50.8 cm long) is adhered to the central region of testing platform (6 inch (50.8 cm) length parallel to long dimension of platform), and is used as an interface material between the test sample and steel platform when performing COF wet web-to-web testing (described later).

The sled is composed of a block of plexiglass (aka extruded acrylic sheet material) with dimensions of 2.9 (+/-0.1) cm long, 2.54 (+/- 0.05) cm wide, and 1.0 (+/- 0.1) cm thick, with one of the 2.54 cm length edges rounded such that one sled face, when laid Hat on a smooth table surface, contacts the table with 2.54 cm (+/- 0.1 cm) long by 2.54 cm wide. The roundedness of the sled edge should end half-way of the sled thickness (0.5 cm +/- 0.1 cm). The sled face with the rounded edge is the sled's leading edge during friction testing. In order to connect the sled handle (for the connecting wire connection), a 0.3125 cm (1/32 inch) diameter hole is drilled though the sled, positioned 0.2 cm from the leading edge and 0.6 cm from the top face (in the thickness direction).

A 0.3125 cm (1/32 inch) diameter stainless steel wire is bent into a v-shape to extend 2.5 cm (+/- 0.5 cm) from the leading edge, fed through the drilled holes, and bent upward about 0.3 cm (+/-0.1 cm)), away from the sled's rounded edge, at the apex of the V shape, for attaching the o-ring of the connecting wire. A 1 inch wide (2.54 cm wide) strip of abrasive cloth (utility cloth sheet, aluminum oxide P120) is adhered with doubled-sided tape to the sled from the trailing edge of the bottom face, around the leading edge, to the trailing edge on the top face (about 6-7 cm of abrasive fabric length). The abrasive fabric is used to better grip (compared to plexiglass surface) the wet web samples with respect to the sled. The edges of the sled and the abrasive cloth should be flush (no over or under hanging edges). The complete sled apparatus (minus the extra weights, described below) should weigh 9.25 (+/-2) grams.

Two different, weights are used in the COF measurement:

1) a 200g (+/- 1 gram) cylindrical shaped weight, 2.85cm (1.125 inch) diameter and 3.81 cm (1.5 inches) tall this cylindrical weight is used in measuring the "web-to-web COF"; and,

2) a 1.27 cm (0.5 inch) thick, 2.54 cm (1 inch) square of aluminum, with a 2.54 cm (1") square piece of double-sided tape (Scotch® Foam Mounting Double-Sided Tape, 1 Wide) adhered to one of the two, 2.54 cm (1") square faces, and a smaller strip of the same double-sided tape (cut 3 mm (+/- 1 mum) wide by 2.5 cm (1 inch) long) adhered on top of the previously placed tape, flush with one of the square edges (see Figure 2). The tape is used to secure the weight position on top the sled, and from falling off, during testing. The sled and adhered tape may weigh between 21-25 grams. This weight is used in measuring the "web-to-skin COF".

Since a universally accepted, standard skin replica material is not commercially available (at the time of this writing), an effective skin "mimic" was commercially found in 3M™ Transpore™ Surgical Tape - 5.08 cm (2") wide (catalog #1527-2). This tape is used in measuring what is termed "web-to-skin COF'.

A calibrated adjustable pipette, capable of delivering between 0 to 1 milliliters of volume, accurate to 0.005 ml is used in the test.

Deionized (DI) water is used for web-to-web COF measurement. Aqueous saline solution (0.9 % ACS grade NaCl in DI water) is used for the web-to-skin COF measurement.

Sample weight is determined using a top loading balance with a minimum resolution of 0.001 g. The balance is protected from air drafts and other disturbances using a draft shield. Weights are recorded when the readings on the balance become constant with respect to time.

Before testing begins, the tester should clean and dry his/her hands thoroughly (to remove excess oils and/or lotions present that could affect test results).

b. Measurement of Wet Web-to-Web COF

Overview

The wet web-to-web coefficient of friction ($COF_{wet\ web-web}$), as described here, is measured by rubbing one stack of wet usable units material against another stack of wet usable units material, at a speed of 6 in/min, over two intervals of distance of 0.5 inches each. The average of the two peak forces (one from each 1.27 cm (0.5 inch) interval) is divided by the normal force applied to obtain a wet web-to-web COF reading.

Detailed Method

Cut two or more strips from a usable unit of samples to be tested, 5.0 - 6.5 cm long in the MD, and 2.54 (+/- 0.05) cm wide in the CD (all cut strips should be the exact same dimensions). Stack the strips on top one another, with the sample sides of interest facing outwards. The number of strips used in the stack depends on the usable unit basis weight, according to the following calculation (INT function rounds down to the nearest integer):

$$N_{strips} = INT(70 / BW_{usable\ unit}) + 1$$

where:

Nstrips = Number of usable unit strips in stack
$BW_{usable\ unit}$ = basis weight of usable unit in grams per square meter (gum).

This first sled stack is henceforth referred to as the "sled-stack$_1$".

Cut another $N_{strips}$ number of strips from one or more usable units of test material, 7.5 - 10 cm long in the MD, and 4.5 - 6.5 cm wide in the CD (all cut strips should be the exact same dimensions). Stack the $N_{strips}$ number of strips on top one another, with the sample sides of interest facing outward, and all edges aligned on top one another. This stack is referred to henceforth as the "base-stack".

Using the calibrated balance, measure the weight (to the nearest 0.001. g) of the sled-stack$_1$ ($W_{sled-stack1}$), then the base-stack ($W_{base-stack}$). Place the "sled-stack$_1$" on the bottom (rounded) side of sled (i.e., the side with the abrasive surface), with one short-side end aligned with the trailing end of the sled. Place the "base stack" on the abrasive fabric adhered to the testing platform, with its long side parallel to the long-side of the abrasive fabric.

Add DI water in the amount of 4.0 times the dry mass of each stack. Use a calibrated pipette, and adjust to nearest 0.005 ml. If the amount of water needed for each stack exceeds the pipette capacity, divide the total amount into smaller portions such that the sum of each portion for each stack equals the total amount needed for each stack, as calculated below:

$$\text{ml of DI Water for "sled-stack}_1\text{"} = 4.0 * W_{sled-stack1}$$

$$\text{ml of DI Water for "base-stack"} = 4.0 * W_{base-stack}$$

Distribute water as uniformly as possible on each sample stack, one drop at a time, starting at one end of the stack, and working towards the other end. Deliver the liquid in such a way that the exposed stack surface receives an equal distribution of the total volume (as best as can be done one drop at a time). The "base stack" should be flat after wetting - use the smooth rounded side of the pipette tip to gently smooth the surface of wrinkles and/o puckers, if needed, being careful not to damage or overly deform the stack surface.

Gently wrap the wetted "sled stack" around the sled (through the wire sled handle), ensuring that the hack edge of the stack is flush with the trailing edge of the sled (overhang of 0-1 mm is permissible). The other end of the stack should be laying flat on top of the sled. The stack should be wrinkle-free, but also not overly strained such that its width narrows less than 1 inch in width, which could cause some of the sled's abrasive surface to be exposed.

Next, gently place the sled (with stack attached) down on top of the wetted "base web" in a position such that the sled's rounded leading edge is pointed towards the platform pulley, and the sled's trailing edge is between 1-1.5 cm from the back edge of the "base stack" (i.e., edge furthest from pulley).

After ensuring that the connecting wire is aligned properly in the pulley groove, move the testing instrument cross-head up or down while holding the connecting-wire loop (with a small amount of tension to keep the line taught) so that the connecting-wire loop hole is aligned directly above and about the same distance away from the pulley as the sled hook. Then gently place the connecting-wire loop on the metal platform surface next to the "base-stack" (not on top of the base-stack). After ensuring that the connecting wire is hanging without any other restrictions or weights, "zero" (or "re-zero") the load cell on the testing instrument such that the force reading is 0 +/- 1 gram, and "zero" (or "re-zero") the cross-head position reading. Attach the connecting-wire loop with the sled hook. The force reading on the instrument may show a little tension - 20 grams or less. If higher than 20 grams, move the cross-head down a small amount and re-zero position. If the connection wire touches platform, it is too loose, and the cross-head needs to be moved up and re-zeroed in its position.

Place 200g weight on top of the sled, positioned such that the back edge of the weight is even with the back (trailing) edge of the sled. Press fingers of one hand down on the back edge (furthest from the pulley) of the "base-stack" sample without touching the sled or the attached "sled-stack$_1$" in any way. This is done to ensure the "base-stack" sample does not slide on the abrasive fabric base on the platform during testing.

Press the "Test" button on the Thwing-Albert Vantage tester to trigger the script operation. The test script is programmed to move the cross-head (and therefore the attached connecting-wire, sled, and sled-stack) at a speed of 15.24cm (6 in) min for a distance of 1.27cm (0.5 inches) (Pull #1). During this time, the force and displaced distance readings are collected at a rate of 25 data points/sec. After pulling the sled the first 1.27 cm (0.5 inches), the cross-head pauses for 10 seconds, then restarts again at 15.24 (6 in) min for another 1.27 cm (0.5 inches) (Pull #2), collecting data at 25 points/sec. The script captures the maximum (i.e., peak) force from pull #1 and #2, calculates an average of the 2 peaks, and divides this value by the normal force applied (e.g., 200 gram weight plus the ≈9 gram sled weight).

$$COF_{wet\ web-web} = (Peak1 + Peak2) / 2 / (Sled\ Weight + Additional\ Weight)$$

where:

Peak1 = peak force (g) from pull #1 (first 1.27cm (0.5 inches) of travel)
Weak2 = peak force (g) from pull #2 (second, 1.27cm (0.5 inches) of travel)
Sled Weight = 9 grams

Additional Weight = 200 grams

The test is considered invalid if: 1) the sled weight falls off the sled during testing; 2) the leading edge of the sled moves past the end of the "base-stack" material; or, 3) the connecting-wire slips off the pulley or sled at any time during the test.

Repeat the measurement procedure such that two replicate values of COF$_{wet\ web-web}$ are generated. The reported value is the average of the two replicates, i.e.,

$$\mathrm{COF}_{\text{wet web-web (reported)}} = (\mathrm{COF}_{\text{wet web-web(rep\#1)}} + \mathrm{COF}_{\text{wet web-web (rep\#2)}}) / 2$$

### c. Measurement of Wet Web-to-Skin COF

Overview

The wet "web-to-skin" coefficient of friction (COF$_{wet\ web-skin}$), as described here, is measured by rubbing one stack of dry usable units material as it moves across the surface of 3M™ Transpore™ Tape (2" wide, catalog #1527-2) immediately after absorbing 0.40 ml of saline water solution. The Transpore™ Tape is adhered to the testing platform, while the usable units material stack is attached to the sled (held down by the weight and double-sided tape on the sled), connected to the Thwing-Albert Vantage via connecting wire. The sled is pulled at a speed of 25.4cm (10 in) min for 7.62 (3 inches) total travel distance. After contacting and absorbing the liquid droplet, the drag force is measured and averaged over a distance of 3.81 cm (1.5 inches). This average force is divided by the normal force applied to obtain a wet web-to-skin COF reading.

Detailed Method

Cut four or more strips from a usable unit of sample to be tested, 5.0 - 6.5 cm long in the MD, and 2.54 (+/-0.05) cm wide in the CD (all cut strips should be the exact same dimensions). Stack the strips on top one another, with the sample sides of interest facing outward from the stack, and all edges aligned on top one another. The number of strips used in the stack depends on the usable unit basis weight, according to the following calculation (INT function rounds down to the nearest integer):

$$\mathrm{N}_{\text{strips}} = \mathrm{INT}(160 / \mathrm{BW}_{\text{usable unit}}) + 1$$

where:

    Nstrips = Number of usable unit strips in stack
    BW$_{usable\ unit}$ = basis weight of usable unit in grams per square meter (gsm).

This second sled stack is henceforth referred to as the "sled-stack$_2$".

Cut an unused, 15.24cm (6 inch)(+/-1.27cm(0.5")) long piece of 5.08cm (2") wide Transpore™ Tape from the roll, being careful to handle only the outside 1.27cm (0.5") from either end, and place it sticky-side down on the metal platform surface, centered and in-line with the pulley and string. The tape should lie flat, without bumps or wrinkles - if the tape is inadvertently touched (other than 0-1.27cm (0.5 inches) from the long ends) during handling, discard tape strip and cut new strip from roll.

Place the "sled-stack$_2$" on the bottom (rounded) side of sled, with the short-end of the stack aligned with the trailing end of the sled. Gently wrap the dry "sled-stack$_2$" around the sled (through the wire sled handle), ensuring that the back edge of the stack is flush with the trailing edge of the sled (overhang of 0-1mm is permissible). The other end of the stack will lay flat on top of the sled once the weight is placed down on it. In wrapping the stack around the sled, the stack should be wrinkle-free and not be overly strained such that its dry strength is damaged in any significant way. The sled-stack should be aligned with the sled such that sled's abrasive surface is not exposed or in contact with the Transpore™ Tape at any time during testing.

Next, gently place the sled (with stack attached) down on top of the Transpore™ Tape, in a position such that the sled's rounded leading edge is pointed towards the platform pulley, and the sled's trailing edge is between 1.27cm-2.54cm (0.5-1 inch) from the back edge of the Transpore™ Tape (i.e., the short-edge of the tape furthest from pulley). Place the aluminum square weight on top of the sled, 2.54cm$^2$ (1 in$^2$) side down, such that the weight's back edge (i.e.,

with 2 layers of double-sided tape) is furthest from the pulley, and is flush and in-line with the back edge of sled. The weight's leading edge covers the end of the web-stack and helps hold it in place. The side edges of the weight are to be parallel and directly in-line with the sled sides (see Figure 2).

After ensuring that the connecting wire is aligned properly in the pulley groove, move the testing instrument cross-head up or down while holding the connecting-wire loop (with a small amount of tension to keep the line taught) so that the connecting-wire loop hole is aligned directly above and about the same distance away from the pulley as the sled hook. Then gently place the connecting-wire loop on the metal platform surface next to the sled. After ensuring that the connecting wire is hanging without any other restrictions or weights, "zero" (or "re-zero") the load cell on the testing instrument such that the force reading is 0 +/- 1 gram, and "zero" (or "re-zero") the cross-head position reading. Attach the connecting-wire loop with the sled hook. The force reading on the instrument may show a little tension - 20 grams or less. If higher than 20 grams, move the cross-head down a small amount and re-zero position. If the connection wire touches platform, it is too loose, and the cross-head needs to be moved up and re-zeroed in its position.

Using a calibrated pipette, carefully place 0.40 +/-0.01 ml of saline water solution to the Transpore™ Tape surface, in one contiguous round droplet, in a position that is centered and directly in front of the sled, such that the edge of the drop closest to the sled-stack (on the sled) is between 1.0 and 1.5 cm distance from the nearest edge of the sled-stack.

Press the "Test" button on the Thwing-Albert Vantage tester to trigger the script operation. The test script is programmed to move the cross-head (and therefore the attached connecting-wire, sled, and sled-stack) at a speed of 25.4cm (10 in)/min for a distance of 7.62cm (3.0 inches). During this time, the force and displaced distance readings are collected at a rate of 25 data points/sec. The sled-stack should make contact with the liquid droplet after traveling a distance between 1.0 and 1.5 cm. The force data that is collected between the sled travel distance of 3.57cm (1.4) and 7.37cm (2.9 inches) is averaged and divided by the normal force applied (e.g., 23 gram weight plus the 9 gram sled weight).

$$COF_{wet\ web\text{-}skin} = DragForceAvg\ /\ (Sled\ Weight + Additional\ Weight)$$

where:

DragForceAvg = average drag force (grams) of data collected between 3.57 cm (1.4) and 7.37cm (2.9 inches) of sled travel.
Sled Weight = 9 grams travel.
Additional Weight = 23 grams

The test is considered invalid if: 1) the sled weight falls off the sled during testing; 2) the leading edge of the sled moves past the end of the Transpore™ Tape; or, 3) the connecting-wire slips off the pulley or sled at any time during the test.

Repeat the measurement procedure such that five replicate values of $COF_{wet\ web\text{-}skin}$ are generated. The reported value is the average of the five replicates, i.e.,

$$COF_{wet\ web\text{-}skin\ (reported)} = (COF_{wet\ web\text{-}skin(rep\#1)} + COF_{wet\ web\text{-}skin(rep\#2)} + COF_{wet\ web\text{-}skin(rep\#3)}\ldots)\ /\ 5$$

d. Calculation of Wet COF Ratio

The wet COF ratio ($COF_{ratio}$) for a fibrous structure sample, as defined here, is equal to the wet web-to-web COF divided by the wet web-to-skin COF, i.e.:

$$COF_{ratio} = COF_{wet\ web\text{-}web\ (reported)}\ /\ COF_{wet\ web\text{-}skin\ (reported)}$$

Free Fiber End Test Method

The Free Fiber End Count is measured using the Free Fiber End Test Method described below.

A fibrous structure sample to be tested is prepared as follows. If the fibrous structure is a multi-ply sanitary tissue product, separate the outermost plies being careful to not damage the plies. The outer surfaces of the outermost plies in a multi-ply sanitary tissue product will be the surfaces tested in this test.

If the fibrous structure is a single-ply fibrous structure, then both sides of the single-ply fibrous structure will be tested in this test.

All fibrous structure samples to be tested under this test should only be handled by the fibrous structure samples' edges.

A Kayeness or equivalent Coefficient of Friction (COF) Tester, from Dynisco L.L.C. of Franklin, MA is used in the test. A piece of 100% cotton fabric (square weave fabric; 58 warps/2.54cm (inch) and 68 shutes/2.54cm (inch); warp filaments-having-a-diameter of 0.030cm (0.012 in.) and the shute filaments having a diameter of 0.025cm (0.010 in)) having a Coefficient of Friction of approximately 0.203 is cut and placed on a surface of the moveable base of the Coefficient of Friction Tester. The cotton fabric is taped to the surface of the moveable based so that it does not interfere with movement on the side support rails.

Cut a 1.9cm (¾ inch) wide X 3.81cm (1 ½ inch) long strip from a fibrous structure to be tested. The strip should be cut from the fibrous structure at an angle of 45° to the MD and CD of the fibrous structure.

Tape the fibrous structure strip to a sled of the Coefficient of Friction Tester with Scotch tape such that the surface of the fibrous structure to be tested is facing outward from the sled. Place the sled on the moveable base and start the COF tester. Allow the tester to run until the sled has traveled 6.35cm (2 ½ inches) along the cotton fabric. The pressure applied to the fibrous structure strip is 5 g/cm$^2$. This "brushing" sufficiently orients the free-fiber-ends in an upstanding disposition to facilitate counting them but care must be exerted to avoid breaking substantial numbers of interfiber bonds during the brushing inasmuch as that would precipitate spurious free-fiber-ends.

Remove the fibrous structure strip from the sled. Reattach the fibrous structure strip to the sled with 1.9cm(¾ inch) Scotch tape such that the drag will be in the opposite direction from the original motion and repeat the run for the same distance as before.

Remove the fibrous structure strip and prepare it for examination. The surface of the fibrous structure strip that has been in contact with the cotton fabric is the side to be examined.

Fold the fibrous structure strip in half across an edge of a glass slide cover slip (18 mm square, Number 1 ½ VWR International, West Chester, PA, #48376-02 or equivalent) such that fold line runs across the narrower dimension of the fibrous structure strip and place glass slide cover slip and fibrous structure strip on a clean glass slide 2.54cm (1 inch) x 7.62cm (3 inch) (2 per sample) VWR International, West Chester, PA, #48300-047 or equivalent).

On another clean glass slide mark two lines 1.27cm( ½ inch) apart in the middle of the glass slide with a diamond etching pen. Fill in the etched line with a felt tip marker for greater clarity in reading the edges of the measurement area. Place this glass slide over the glass slide cover slip and fibrous structure strip such that the glass slide cover slip and fibrous structure strip is sandwiched between the two glass slides and the etched lines are against the folded fibrous structure strip and extend vertically form the folded edge of the fibrous structure strip. Secure the sandwich arrangement together with 1.9cm (¾ inch) Scotch tape.

Using the Image Analysis Measure Tool (a Light/Stereo microscope, with digital camera - 140X magnification, for example a Nikon DXM1200F and an image analysis program (Image Pro available from Media Cybernetics, Inc, Bethesda, MD), place a calibrated stage micrometer onto the microscope stage and trace various scaled lengths of the micrometer between 0.1. mm and 1.0 mm for calibration. Verify calibration and record. Place the fibrous structure strip arrangement under the lens of the microscope, using the same magnification as for the micrometer, so that the edge that is folded over the glass cover slide slip is projected onto the screen/monitor. Lenses and distances should be adjusted so the total magnification is either 140X. Project the image so that the magnification is 140X. All fibers that have a visible loose end extending at least 0.1 mm from the surface of the folded fibrous structure strip should be measured and counted. Individual fibers are traced to determine fiber length using the Image Pro software and are measured, counted and recorded. Starting at one etched line and going to the other etched line, the length of each free fiber end is measured. The focus is adjusted so each fiber to be counted is clearly identifies. A free fiber end is defined as any fiber with one end attached to the fibrous structure matrix, and the other end projecting out of, and not returning back into, the fibrous structure matrix. Examples of free fiber ends in a fibrous structure are shown in Fig. 17. In other words, only fibers that have a visible loose (unbonded) or free end and having a free-end length of about 0.1 mm or greater are counted. Fibers that have no visible free end are not counted. Fibers having both ends free are also not counted. The length of each free fiber end is measured by tracing from the point at which it leaves the tissue matrix to its end. The length is measured using a mouse, light pen, or other suitable tracing device. The measurements are reported in millimeters and are stored in the image analysis text file. Data is transferred to a Microsoft Excel spreadsheet for sorting of the fiber lengths. The total number of free fiber ends (excluding free fiber ends less than 0.1 mm long) is calculated. The total number of free fiber ends within a certain length range ("Free Fiber End Count") can be calculated.

**Claims**

**1.** A fibrous structure comprising a nonwoven substrate wherein the nonwoven substrate comprises a plurality of filaments comprising a hydroxyl-containing polymer, wherein the hydroxyl-containing polymer is selected from the group consisting of polyvinyl alcohol and derivatives thereof and mixtures thereof and a plurality of solid additives that are positioned between the nonwoven substrate and a non-thermoplastic bonding material which is bonded to the nonwoven substrate at one or more bond sites.

2. The fibrous structure according to Claim 1, wherein the nonwoven substrate further comprises starch and/or starch derivative filaments.

3. The fibrous structure according to any of the preceding claims wherein the nonwoven substrate exhibits a basis weight of from 10 g/m$^2$ to 100 g/m$^2$.

4. The fibrous structure according to any of the preceding claims wherein the solid additives comprise fibers, preferably wherein the fibers comprise pulp fibers, more preferably wherein the pulp fibers are selected from the group consisting of hardwood pulp fibers, softwood pulp fibers and mixtures thereof, more preferably wherein the pulp fibers comprise eucalyptus pulp fibers and/or chemically treated pulp fibers.

5. The fibrous structure according to any of the preceding claims wherein the solid additives are uniformly distributed on a surface of the nonwoven substrate.

6. The fibrous structure according to any of the preceding claims wherein the bonding material comprises a second nonwoven substrate, preferably wherein the second nonwoven substrate comprises a plurality of filaments comprising a hydroxyl-containing polymer, more preferably wherein the hydroxyl-containing polymer is selected from the group consisting polysaccharides and derivatives thereof, polyvinyl alcohol and derivatives thereof and mixtures thereof, even more preferably wherein the hydroxyl-containing polymer comprises a starch and/or starch derivative.

7. The fibrous structure according to any of the preceding claims wherein the bonding material comprises a latex.

8. The fibrous structure according to any of the preceding claims wherein the at least one bond site comprises a thermal bond.

9. The fibrous structure according to any of the preceding claims wherein the at least one bond site comprises a pressure bond.

10. The fibrous structure according to any of the preceding claims wherein the bonding material is bonded to the non woven substrate by a plurality of discrete bond sites.

11. The fibrous structure according to any of the preceding claims wherein the fibrous structure exhibits a Wet Coefficient of Friction Ratio of greater than 0.20 as measured by the Wet Coefficient of Friction Ratio Test.

12. The fibrous structure according to any of the preceding claims wherein the fibrous structure exhibits a Wet Web-Web Coefficient of Friction of greater than 0.7.

13. The fibrous structure according to any of the preceding claims wherein the fibrous structure comprises a surface softening agent, preferably wherein the surface softening agent comprises a quaternary ammonium compound.

14. The fibrous structure according to any of the preceding claims wherein the fibrous structure comprises the solid additives positioned on opposite surfaces of the nonwoven substrate and the bonding material bonded to the opposite surfaces of the nonwoven substrate at one or more bond sites such that the solid additives are positioned between the bonding material and the nonwoven substrate.

15. The fibrous structure according to any of the preceding claims wherein the fibrous structure exhibits a free fiber end count of greater than 40.

**Patentansprüche**

1. Faserstruktur, umfassend ein Vliessubstrat, wobei das Vliessubstrat eine Vielzahl von Fäden umfasst, die ein hydroxylhaltiges Polymer umfassen, wobei das hydroxylhaltige Polymer ausgewählt ist aus der Gruppe bestehend aus Polyvinylalkohol und Derivaten davon und Mischungen davon, und eine Vielzahl von festen Zusatzstoffen, die zwischen dem Vliessubstrat und einem nicht thermoplastischen Bindungsmaterial, welches an einer oder mehreren Bindungsstellen an das Vliessubstrat gebunden ist, angeordnet sind.

2. Faserstruktur nach Anspruch 1, wobei das Vliessubstrat ferner Stärke- und/ oder Stärkederivat-Fäden umfasst.

3. Faserstruktur nach einem der vorstehenden Ansprüche, wobei das Vliessubstrat ein Basisgewicht von 10 g/m$^2$ bis 100 g/m$^2$ aufweist.

4. Faserstruktur nach einem der vorstehenden Ansprüche, wobei die festen Zusatzstoffe Fasern umfassen, vorzugsweise wobei die Fasern Zellstofffasern umfassen, mehr bevorzugt wobei die Zellstofffasern ausgewählt sind aus der Gruppe bestehend aus Hartholz-Zellstofffasern, Weichholz-Zellstofffasern und Mischungen davon, mehr bevorzugt wobei die Zellstofffasern Eukalyptus-Zellstofffasern und/oder chemisch behandelte Zellstofffasern umfassen.

5. Faserstruktur nach einem der vorstehenden Ansprüche, wobei die festen Zusatzstoffe gleichmäßig auf einer Oberfläche des Vliessubstrats verteilt sind.

6. Faserstruktur nach einem der vorstehenden Ansprüche, wobei das Bindungsmaterial ein zweites Vliessubstrat umfasst, vorzugsweise wobei das zweite Vliessubstrat eine Vielzahl von Fäden umfasst, die ein hydroxylhaltiges Polymer umfassen, mehr bevorzugt wobei das hydroxylhaltige Polymer ausgewählt ist aus der Gruppe bestehend aus Polysacchariden und Derivaten davon, Polyvinylalkohol und Derivaten davon und Mischungen davon, noch mehr bevorzugt wobei das hydroxylhaltige Polymer eine Stärke und/oder ein Stärkederivat umfasst.

7. Faserstruktur nach einem der vorstehenden Ansprüche, wobei das Bindungsmaterial ein Latex umfasst.

8. Faserstruktur nach einem der vorstehenden Ansprüche, wobei die mindestens eine Bindungsstelle eine thermische Bindung umfasst.

9. Faserstruktur nach einem der vorstehenden Ansprüche, wobei die mindestens eine Bindungsstelle eine Druckbindung umfasst.

10. Faserstruktur nach einem der vorstehenden Ansprüche, wobei das Bindungsmaterial durch eine Vielzahl von diskreten Bindungsstellen an das Vliessubstrat gebunden ist.

11. Faserstruktur nach einem der vorstehenden Ansprüche, wobei die Faserstruktur ein Nassreibungskoeffizientenverhältnis von mehr als 0,20, wie durch den Nassreibungskoeffizientenverhältnis-Test gemessen, aufweist.

12. Faserstruktur nach einem der vorstehenden Ansprüche, wobei die Faserstruktur einen Bahn-zu-Bahn-Nassreibungskoeffizienten von mehr als 0,7 aufweist.

13. Faserstruktur nach einem der vorstehenden Ansprüche, wobei die Faserstruktur einen Oberflächenweichmacher umfasst, vorzugsweise wobei der Oberflächenweichmacher eine quartäre Ammoniumverbindung umfasst.

14. Faserstruktur nach einem der vorstehenden Ansprüche, wobei die Faserstruktur die festen Zusatzstoffe auf entgegengesetzten Oberflächen des Vliessubstrats angeordnet und das Bindungsmaterial an einer oder mehreren Bindungsstellen an die entgegengesetzten Oberflächen des Vliessubstrats gebunden umfasst, so dass die festen Zusatzstoffe zwischen dem Bindungsmaterial und dem Vliessubstrat angeordnet sind.

15. Faserstruktur nach einem der vorstehenden Ansprüche, wobei die Faserstruktur eine Anzahl von freien Faserenden von mehr als 40 aufweist.

**Revendications**

1. Structure fibreuse comprenant un substrat non tissé, dans laquelle le substrat non tissé comprend une pluralité de filaments comprenant un polymère contenant un hydroxyle, dans laquelle le polymère contenant un hydroxyle est choisi dans le groupe constitué d'alcool polyvinylique et ses dérivés et leurs mélanges et une pluralité d'additifs solides qui sont positionnés entre le substrat non tissé et un matériau de liaison non thermoplastique qui est lié au substrat non tissé au niveau d'un ou plusieurs sites de liaison.

2. Structure fibreuse selon la revendication 1, dans laquelle le substrat non tissé comprend en outre des filaments d'amidon et/ou de dérivé d'amidon.

3. Structure fibreuse selon l'une quelconque des revendications précédentes, dans laquelle le substrat non tissé présente une masse surfacique allant de 10 g/m$^2$ à 100 g$_{/m}$$^2$.

4. Structure fibreuse selon l'une quelconque des revendications précédentes, dans laquelle les additifs solides comprennent des fibres, de préférence dans laquelle les fibres comprennent des fibres de pâte à papier, plus préférablement dans laquelle les fibres de pâte à papier sont choisies dans le groupe constitué de fibres de pâte à papier de bois de feuillus, fibres de pâte à papier de bois de conifères et leurs mélanges, plus préférablement dans laquelle les fibres de pâte à papier comprennent des fibres de pâte à papier d'eucalyptus et/ou des fibres de pâte à papier chimiquement traitées.

5. Structure fibreuse selon l'une quelconque des revendications précédentes, dans laquelle les additifs solides (16) sont répartis uniformément sur une surface du substrat non tissé.

6. Structure fibreuse selon l'une quelconque des revendications précédentes, dans laquelle le matériau de liaison comprend un deuxième substrat non tissé, de préférence dans laquelle le deuxième substrat non tissé comprend une pluralité de filaments comprenant un polymère contenant un hydroxyle, plus préférablement dans laquelle le polymère contenant un hydroxyle est choisi dans le groupe constitué de polysaccharides et leurs dérivés, alcool polyvinylique et ses dérivés et leurs mélanges, encore plus préférablement dans laquelle le polymère contenant un hydroxyle comprend un amidon et/ou un dérivé d'amidon.

7. Structure fibreuse selon l'une quelconque des revendications précédentes, dans laquelle le matériau de liaison comprend un latex.

8. Structure fibreuse selon l'une quelconque des revendications précédentes, dans laquelle ledit au moins un site de liaison comprend une liaison thermique.

9. Structure fibreuse selon l'une quelconque des revendications précédentes, dans laquelle ledit au moins un site de liaison comprend une liaison par pression.

10. Structure fibreuse selon l'une quelconque des revendications précédentes, dans laquelle le matériau de liaison est lié au substrat non tissé par une pluralité de sites de liaison distincts.

11. Structure fibreuse selon l'une quelconque des revendications précédentes, où la structure fibreuse présente un rapport de coefficient de frottement à l'état mouillé supérieur à 0,20 tel que mesuré par le test de rapport de coefficient de frottement à l'état mouillé.

12. Structure fibreuse selon l'une quelconque des revendications précédentes, où la structure fibreuse présente un coefficient de frottement nappe-nappe à l'état mouillé supérieur à 0,7.

13. Structure fibreuse selon l'une quelconque des revendications précédentes, où la structure fibreuse comprend un agent d'adoucissement de surface, de préférence dans laquelle l'agent d'adoucissement de surface comprend un composé d'ammonium quaternaire.

14. Structure fibreuse selon l'une quelconque des revendications précédentes, où la structure fibreuse comprend les additifs solides positionnés sur des surfaces opposées du substrat non tissé et le matériau de liaison lié aux surfaces opposées du substrat non tissé au niveau d'un ou plusieurs sites de liaison de telle sorte que les additifs solides sont positionnés entre le matériau de liaison et le substrat non tissé.

15. Structure fibreuse selon l'une quelconque des revendications précédentes, où la structure fibreuse présente un nombre d'extrémités libres de fibre supérieur à 40.

Fig. 1

Fig. 2

Fig. 3

22

PROVIDE A
NONWOVEN SUBSTRATE

DEPOSIT SOLID
ADDITIVES ON A
SURFACE OF THE
NONWOVEN SUBSTRATE

DEPOSIT A
BONDING MATERIAL
ON A SURFACE OF
THE NONWOVEN SUBSTRATE

BONDING THE
BONDING MATERIAL
TO THE NONWOVEN
SUBSTRATE AT
LEAST ONE BOND SITE

POST PROCESSING
OPERATIONS

COMBINING TWO OR
MORE FIBROUS STRUCTURES
TO FORM A MULTI-PLY
SANITARY TISSUE PRODUCT

Fig. 4

**EP 2 464 776 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4885202 A
- US 4355066 A
- US 5431643 A